# EUROPEAN PATENT APPLICATION

(11) **EP 4 471 267 A1**
(43) Date of publication of application: **04.12.2024**
(21) Application number: 24168336.6
(22) Date of filing: 03.04.2024
(51) Int. Cl.: F02K 1/66, F02K 1/70, F02K 1/72

(54) **TURBINE ENGINE HAVING A THRUST REVERSER SYSTEM**

(30) Priority: 01.06.2023 US 202318327629
(71) Applicant: General Electric Company, Schenectady, NY 12345 (US)
(72) Inventor: HUNTER, Scott, Schenectady, 12345 (US)
(74) Representative: Openshaw & Co.

(57) **Abstract**

A turbine engine (10) includes a fan (38), a nacelle (50), and a thrust reverser system (100). The fan (38) includes a plurality of fan blades (40). Each fan blade (40) of the plurality of fan blades (40) is rotatable about a pitch axis. The nacelle (50) circumferentially surrounds the fan (38). The thrust reverser system (100) includes a transcowl (106) that forms a portion of the nacelle (50). The thrust reverser system (100) translates the transcowl (106) axially forward to an opened position during a reverse thrust condition and pitches the fan blades (40) about the pitch axis to generate a reverse thrust through the turbine engine (10).

## Description

### TECHNICAL FIELD

The present disclosure relates generally to turbine engines having a thrust reverser system.

### BACKGROUND

A turbine engine generally includes a fan and a core section arranged in flow communication with one another. A ducted turbine engine includes a nacelle circumferentially surrounding at least a portion of the fan. For at least some turbine engines, the nacelle includes a thrust reverser system to generate a reverse thrust.

### BRIEF DESCRIPTION OF THE DRAWINGS

The foregoing and other features and advantages will be apparent from the following, more particular, description of various exemplary embodiments, as illustrated in the accompanying drawings, wherein like reference numbers generally indicate identical, functionally similar, and/or structurally similar elements.
FIG. 1 is a schematic cross-sectional diagram of a turbine engine with a thrust reverse system, taken along a longitudinal centerline axis of the turbine engine, according to the present disclosure.
FIG. 2 is a schematic, axial side view of the turbine engine of FIG. 1 with the thrust reverser system in a fully closed position, according to the present disclosure.
FIG. 3 is a schematic, axial side view of the turbine engine of FIG. 1 with the thrust reverser system in a fully opened position, according to the present disclosure.
FIG. 4 is a flow diagram of a method of operating the turbine engine of FIGS. 1 to 3, according to the present disclosure.

### DETAILED DESCRIPTION

Additional features, advantages, and embodiments of the present disclosure are set forth or apparent from a consideration of the following detailed description, drawings, and claims. Moreover, both the foregoing summary of the present disclosure and the following detailed description are exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the spirit and the scope of the present disclosure.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or vehicle, and refer to the normal operational attitude of the turbine engine or vehicle. For example, with regard to a turbine engine, forward refers to a position closer to an engine inlet and aft refers to a position closer to an engine nozzle or exhaust.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

As used herein, the term "forward thrust" refers to a thrust generated by a turbine engine causing airflow to move from forward of the turbine engine to aft of the turbine engine, thereby accelerating the turbine engine or propelling the turbine engine forward.

As used herein, the term "reverse thrust" refers to a thrust generated by a turbine engine causing airflow to move from aft of the turbine engine to forward of the turbine engine, thereby decelerating the turbine engine or propelling the turbine engine aftward.

A turbine engine generally includes a fan and a core section arranged in flow communication with one another, as detailed above. Typically, a ducted turbine engine includes a fan with fixed position fan blades (e.g., fan blades that do not pitch about a pitch axis) and generates reverse thrust with a thrust reverser system in a nacelle that includes an aft portion that translates aftward to expose a cascade system and a door that blocks the fan air flow and that redirects the air flow to generate the reverse thrust. In many ducted turbine engines, the cascade system is a fixed position reverse thrust cascade that directs the fan flow outside of the engine and forward to generate reverse thrust. Such thrust reverser systems, however, require long nacelles to accommodate the cascade system and the door, and to allow the aft portion of the nacelle to translate aftward. Thus, such thrust reverser systems add weight and additional components to the turbine engine, thereby reducing an overall efficiency of the turbine engine.

Accordingly, the present disclosure provides for an improved thrust reverser system for a turbine engine with a variable pitch fan. The thrust reverser system of the present disclosure includes an aft portion of the nacelle, also referred to as a transcowl, that translates axially forward into a hollow interior of the nacelle. The variable pitch fan is controlled to pitch about a pitch axis of the fan blades in order to reverse the air flow through the fan such that the air flows from aft to forward of the turbine engine. Translating the transcowl axially forward into the nacelle reduces the length of the nacelle during reverse thrust operation such that the air flow is more easily directed into an aft portion of the nacelle to generate the reverse thrust, thereby allowing for efficient use of the variable pitch fan for reverse thrust. The present disclosure also provides for reducing components (e.g., removing the cascade system and the door of current turbine engine reverse thrust systems), thereby, reducing an overall weight of the turbine engine, as compared to turbine engines having reverse thrust systems without the benefit of the present disclosure

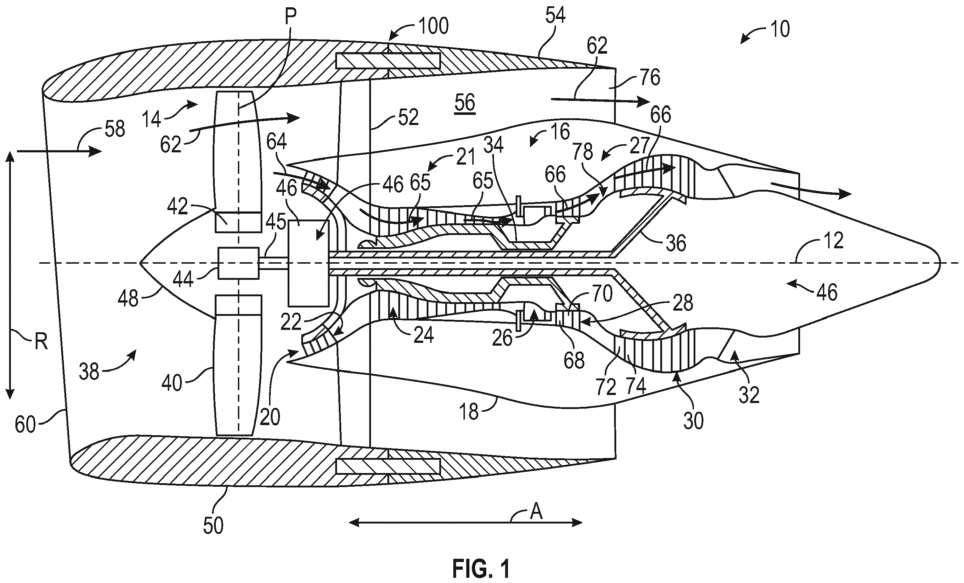

Referring now to the drawings, FIG. 1 is a schematic cross-sectional diagram of a turbine engine 10, taken along a longitudinal centerline axis 12 of the turbine engine 10, according to an embodiment of the present disclosure. As shown in FIG. 1, the turbine engine 10 defines an axial direction A (extending parallel to the longitudinal centerline axis 12 provided for reference) and a radial direction R that is normal to the axial direction A. In general, the turbine engine 10 includes a fan section 14 and a core turbine engine 16 disposed downstream from the fan section 14.

The core turbine engine 16 depicted generally includes an outer casing 18 that is substantially tubular and defines an annular inlet 20. As schematically shown in FIG. 1, the outer casing 18 encases, in serial flow relationship, a compressor section 21 including a booster or a low pressure (LP) compressor 22 followed downstream by a high pressure (HP) compressor 24, a combustion section 26, a turbine section 27 including a high pressure (HP) turbine 28 followed downstream by a low pressure (LP) turbine 30, and a jet exhaust nozzle section 32. A high pressure (HP) shaft 34 or spool drivingly connects the HP turbine 28 to the HP compressor 24 to rotate the HP turbine 28 and the HP compressor 24 in unison. A low pressure (LP) shaft 36 drivingly connects the LP turbine 30 to the LP compressor 22 to rotate the LP turbine 30 and the LP compressor 22 in unison. The compressor section 21, the combustion section 26, the turbine section 27, and the jet exhaust nozzle section 32 together define a core air flow path.

For the embodiment depicted in FIG. 1, the fan section 14 includes a fan 38 (e.g., a variable pitch fan) having a plurality of fan blades 40 coupled to a disk 42 in a spaced apart manner. As depicted in FIG. 1, the fan blades 40 extend outwardly from the disk 42 generally along the radial direction R. Each fan blade 40 is rotatable relative to the disk 42 about a pitch axis P by virtue of the fan blades 40 being operatively coupled to one or more fan blade actuation members 44 configured to collectively vary the pitch of the fan blades 40 in unison, as detailed further below. The fan blades 40, the disk 42, and the fan blade actuation members 44 are together rotatable about the longitudinal centerline axis 12 via a fan shaft 45 that is powered by the LP shaft 36 across a power gearbox, also referred to as a gearbox assembly 46. The gearbox assembly 46 is shown schematically in FIG. 1. The gearbox assembly 46 includes a plurality of gears for adjusting the rotational speed of the fan shaft 45 and, thus, the fan 38 relative to the LP shaft 36.

Referring still to the exemplary embodiment of FIG. 1, the disk 42 is covered by a rotatable fan hub 48 aerodynamically contoured to promote an airflow through the plurality of fan blades 40. In addition, the fan section 14 includes an annular fan casing or a nacelle 50 that circumferentially surrounds the fan 38 and/or at least a portion of the core turbine engine 16. The nacelle 50 is supported relative to the core turbine engine 16 by a plurality of circumferentially spaced outlet guide vanes 52. Moreover, a downstream section 54 of the nacelle 50 extends over an outer portion of the core turbine engine 16 to define a bypass airflow passage 56 therebetween. The nacelle 50 includes a thrust reverser system 100, depicted in a fully closed position in FIG. 1, as detailed further below.

During operation of the turbine engine 10, a volume of air 58 enters the turbine engine 10 through an inlet 60 of the nacelle 50 and/or the fan section 14. As the volume of air 58 passes across the fan blades 40, a first portion of air 62 is directed or routed into the bypass airflow passage 56, and a second portion of air 64 is directed or is routed into the upstream section of the core air flow path, or, more specifically, into the annular inlet 20 of the LP compressor 22. The ratio between the first portion of air 62 and the second portion of air 64 is commonly known as a bypass ratio. The pressure of the second portion of air 64 is then increased, forming compressed air 65, and the compressed air 65 is routed through the HP compressor 24 and into the combustion section 26, where the compressed air 65 is mixed with fuel and burned to generate combustion gases 66.

The combustion gases 66 are routed into the HP turbine 28 and expanded through the HP turbine 28 where a portion of thermal energy and/or kinetic energy from the combustion gases 66 is extracted via sequential stages of HP turbine stator vanes 68 that are coupled to the outer casing 18 and HP turbine rotor blades 70 that are coupled to the HP shaft 34, thus, causing the HP shaft 34 to rotate, thereby supporting operation of the HP compressor 24. The combustion gases 66 are then routed into the LP turbine 30 and expanded through the LP turbine 30. Here, a second portion of the thermal energy and the kinetic energy is extracted from the combustion gases 66 via sequential stages of LP turbine stator vanes 72 that are coupled to the outer casing 18 and LP turbine rotor blades 74 that are coupled to the LP shaft 36, thus, causing the LP shaft 36 to rotate, thereby supporting operation of the LP compressor 22 and rotation of the fan 38 via the gearbox assembly 46.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before being exhausted from a fan nozzle exhaust section 76 of the turbine engine 10, also providing propulsive thrust. The HP turbine 28, the LP turbine 30, and the jet exhaust nozzle section 32 at least partially define a hot gas path 78 for routing the combustion gases 66 through the core turbine engine 16.

The turbine engine 10 depicted in FIG. 1 is by way of example only. In other exemplary embodiments, the turbine engine 10 may have any other suitable configuration. For example, in other exemplary embodiments, the fan 38 may be configured in any other suitable manner (e.g., as a fixed pitch fan) and further may be supported using any other suitable fan frame configuration. Moreover, in other exemplary embodiments, any other suitable number or configuration of compressors, turbines, shafts, or a combination thereof may be provided. In still other exemplary embodiments, aspects of the present disclosure may be incorporated into any other suitable turbine engine, such as, for example, turbofan engines, propfan engines, turbojet engines, turboprop, and/or turboshaft engines.

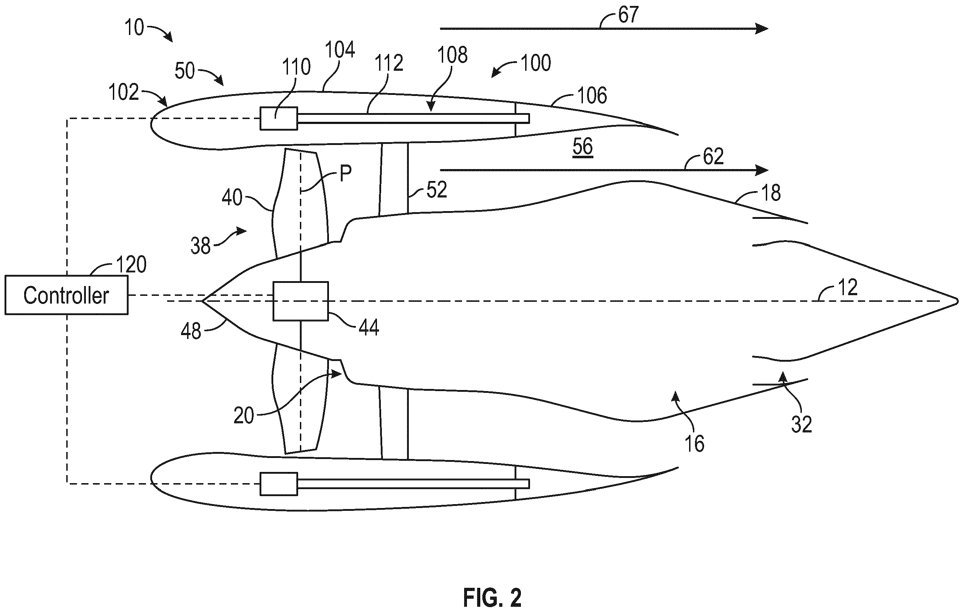

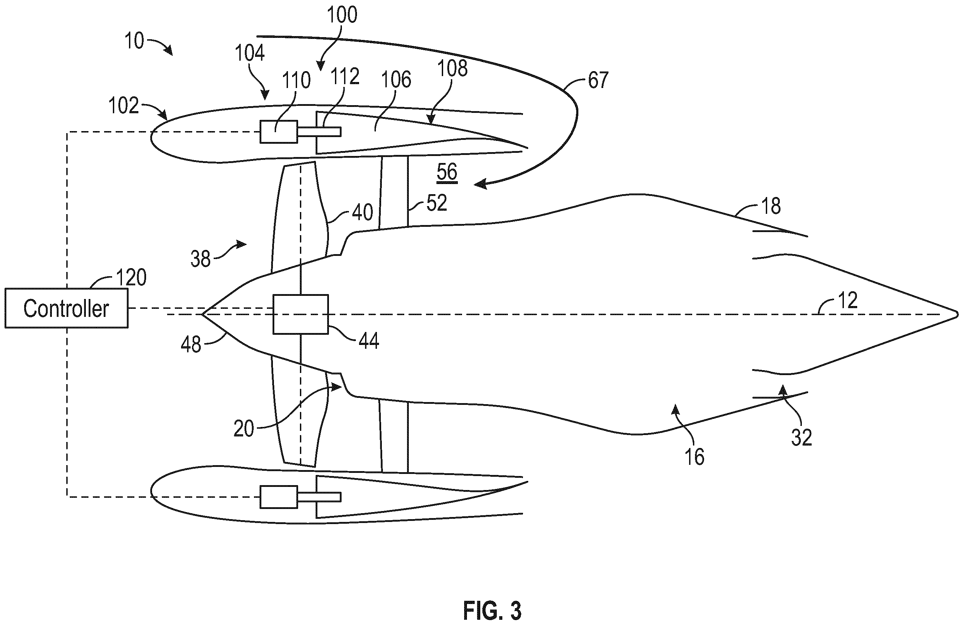

FIG. 2 is a schematic, axial side view of the turbine engine 10 with the thrust reverser system 100 in a fully closed position, according to the present disclosure. FIG. 3 is a schematic, axial side view of the turbine engine 10 with the thrust reverser system 100 in a fully opened position, according to the present disclosure. The nacelle 50 includes an inlet assembly 102, a fan cowl 104, and the thrust reverser system 100. The inlet assembly 102 is positioned at a forward end of the nacelle 50, and the fan cowl 104 is positioned aft of the inlet assembly 102 and at least partially surrounds the fan 38. The thrust reverser system 100 is positioned at least partially aft of the fan cowl 104. The outer casing 18 of the core turbine engine 16 defines a radially inward boundary of the bypass airflow passage 56, and the nacelle 50 defines a radially outward boundary of the bypass airflow passage 56. The first portion of air 62 passes through the bypass airflow passage 56 and exits through the jet exhaust nozzle section 32 during certain operations of the turbine engine 10.

The thrust reverser system 100 includes a translating cowl, also referred to as a transcowl 106 that is slidable relative to the fan cowl 104, and a hollow interior portion 108 of the fan cowl 104. The transcowl 106 is an aft-most section of the nacelle 50, located aft of the fan cowl 104 and circumscribing the outer casing 18 of the core turbine engine 16. When in the fully closed position (FIG. 2), the transcowl 106 is positioned adjacent to the fan cowl 104 and forms a portion of the nacelle 50 and the bypass airflow passage 56. By contrast, when in the fully opened position, the transcowl 106 is positioned within the hollow interior portion 108 of the fan cowl 104. The transcowl 106 can move between the fully closed position (FIG. 2) and the fully opened position (FIG. 3) such that the transcowl 106 can be in a partially opened position anywhere between the fully closed position and the fully opened position to generate a partial reverse thrust (e.g., in which the partial reverse thrust is less than a full reverse thrust when the transcowl 106 is in the fully opened position). The hollow interior portion 108 includes a portion of the nacelle 50 that is hollow and extends annularly about the nacelle 50. The hollow interior portion 108 can extend axially such that the entire nacelle 50 is hollow, or can be sized to accommodate only the transcowl 106. In some embodiments, the transcowl 106 can be disposed over the nacelle 50 in the fully opened position rather than within the hollow interior portion 108.

The thrust reverser system 100 includes one or more transcowl actuation members 110 having one or more rods 112 that extend axially from the one or more transcowl actuation members 110. The one or more rods 112 are coupled to the transcowl 106. The thrust reverser system 100 actuates the one or more transcowl actuation members 110 to translate the transcowl 106 axially forward from the fully closed position to the fully opened position, as detailed further below. The thrust reverser system 100 actuates the one or more transcowl actuation members 110 axially aftward from the fully closed position to the fully opened position, as detailed further below. In this way, the one or more transcowl actuation members 110 push or pull the transcowl 106 to open and to close the thrust reverser system 100. In some embodiments, the transcowl 106 can be disposed on one or more tracks and the one or more transcowl actuation members 110 translate the transcowl 106 along the one or more tracks.

A controller 120 is in communication with the turbine engine 10 for controlling aspects of the turbine engine 10. For example, the controller 120 is in two-way communication with the turbine engine 10 for receiving signals from various sensors and control systems of the turbine engine 10 and for controlling components of the turbine engine 10, as detailed further below. The controller 120 controls the thrust reverser system 100. For example, the controller 120 is in communication with the one or more fan blade actuation members 44 to actuate the plurality of fan blades 40 about the pitch axis P, and the one or more transcowl actuation members 110 to actuate the rods 112 to translate the transcowl 106 axially between the fully closed position and the fully opened position. The controller 120, or components thereof, may be located onboard the turbine engine 10, onboard the aircraft, or can be located remote from each of the turbine engine 10 and the aircraft. The controller 120 can be a Full Authority Digital Engine Control (FADEC) that controls the one or more fan blade actuation members 44 and the one or more transcowl actuation members 110, as detailed further below.

The controller 120 may be a standalone controller or may be part of an engine controller to operate various systems of the turbine engine 10. In this embodiment, the controller 120 is a computing device having one or more processors and a memory. The one or more processors can be any suitable processing device, including, but not limited to, a microprocessor, a microcontroller, an integrated circuit, a logic device, a programmable logic controller (PLC), an application specific integrated circuit (ASIC), or a Field Programmable Gate Array (FPGA). The memory can include one or more computer-readable media, including, but not limited to, non-transitory computer-readable media, a computer readable non-volatile medium (e.g., a flash memory), a RAM, a ROM, hard drives, flash drives, or other memory devices.

The memory can store information accessible by the one or more processors, including computer-readable instructions that can be executed by the one or more processors. The instructions can be any set of instructions or a sequence of instructions that, when executed by the one or more processors, cause the one or more processors and the controller 120 to perform operations. The controller 120 and, more specifically, the one or more processors are programmed or configured to perform these operations, such as the operations discussed further below. In some embodiments, the instructions can be executed by the one or more processors to cause the one or more processors to complete any of the operations and functions for which the controller 120 is configured, as will be described further below. The instructions can be software written in any suitable programming language or can be implemented in hardware. Additionally, or alternatively, the instructions can be executed in logically or virtually separate threads on the processors. The memory can further store data that can be accessed by the one or more processors.

The technology discussed herein makes reference to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

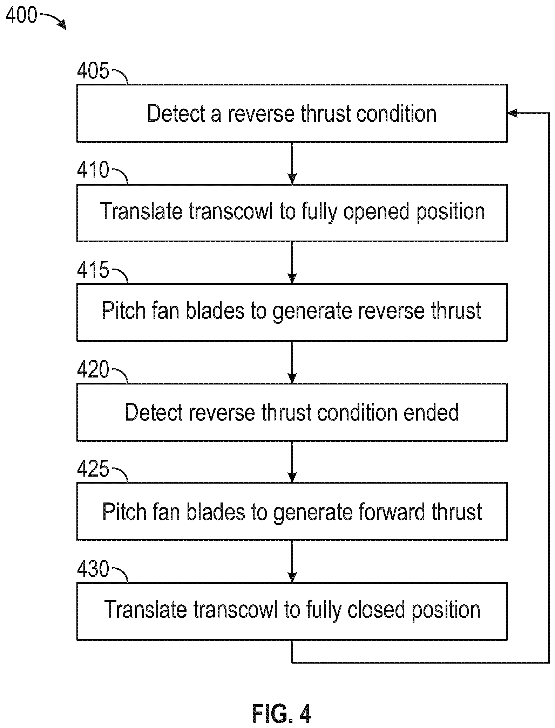

FIG. 4 is a flow diagram of a method 400 of operating the turbine engine 10 (FIGS. 1 to 3), according to the present disclosure. With reference to FIGS. 2 and 3, during operation, the fan 38 generates an air flow (e.g., the first portion of 62) and the core turbine engine 16 generates an air flow in a direction from forward of the turbine engine 10 to aft of the turbine engine 10, as detailed above, to generate a forward thrust to propel the turbine engine 10 (e.g., and the aircraft) forward. Ambient air flows over an outer surface of the turbine engine 10 (as shown by arrow 67). Under certain conditions, the turbine engine 10 may need to generate a reverse thrust to decelerate the aircraft (e.g., to reduce a speed of the aircraft). For example, the turbine engine 10 can produce a reverse thrust using the thrust reverser system 100 to decelerate the aircraft after landing, in the event of a rejected takeoff, and/or during flight in some conditions.

In step 405, the method 400 includes detecting a reverse thrust condition. For example, the controller 120 can receive one or more signals (e.g., sensor signals from one or more sensors on the turbine engine 10 or on the aircraft, engine condition signals from the turbine engine 10, or aircraft condition signals from the aircraft) to detect the reverse thrust condition. The controller 120 can use the one or more signals (e.g., the sensor signals, the engine condition signals, or the aircraft signals) to determine that the aircraft is landing, that the aircraft is in a rejected takeoff procedure (e.g., a flight maneuver in which the aircraft is stopped, and the takeoff procedure is discontinued), and/or that the aircraft is in flight and needs a reverse thrust. In some embodiments, the controller 120 can detect the reverse thrust condition by, for example, receiving an input from a user (e.g., a pilot, a co-pilot, a remote operator, etc.) pushing a button or otherwise initiating the reverse thrust condition. In this way, the controller 120 automatically detects the reverse thrust condition or detects the reverse thrust condition by manual initiation by the user.

In step 410, the method 400 includes translating the transcowl 106 to the fully opened position upon detecting the reverse thrust condition. For example, the controller 120 controls the one or more transcowl actuation members 110 to translate the transcowl 106 axially forward into the hollow interior portion 108 of the fan cowl 104, as shown in FIG. 3. In this way, the controller 120 controls the one or more transcowl actuation members 110 to retract the one or more rods 112 such that the one or more rods 112 translate (e.g., pull) the transcowl 106 axially forward and into the hollow interior portion 108. In some embodiments, the controller 120 controls the one or more transcowl actuation members 110 to translate the transcowl 106 axially forward over the fan cowl 104 of the nacelle 50 rather than within the hollow interior portion 108. The controller 120 can control the one or more transcowl actuation members 110 to translate the transcowl 106 axially forward to an opened position between the fully closed position and the fully opened position such that the transcowl 106 can be in a partially opened position.

In step 415, the method 400 includes pitching the fan blades 40 to generate a reverse thrust. For example, the controller 120 controls the one or more fan blade actuation members 44 to pitch the fan blades 40 about the pitch axis P, as shown in FIG. 3. In this way, the fan blades 40 are pitched to reverse the air flow direction (as shown by the arrow 67) from aft of the turbine engine 10 to forward of the turbine engine 10. The air flows from outside of the turbine engine 10 through the bypass airflow passage 56 (as shown by the arrow 67). In this way, the fan 38 draws in the air from an aftward portion of the bypass airflow passage 56 to generate the reverse thrust.

In step 420, the method 400 includes detecting the reverse thrust condition is ended. For example, the controller 120 receives the one or more signals (e.g., the sensor signals, the engine condition signals, or the aircraft condition signals) to detect the reverse thrust condition is ended or is about to end. The controller 120 can use the one or more signals (e.g., the sensor signals, the engine condition signals, or the aircraft signals) to determine that the aircraft has slowed to a predetermined speed after a landing, that the aircraft has completed the rejected takeoff procedure, and/or that the aircraft is in flight and no longer needs a reverse thrust. In some embodiments, the controller 120 can detect the reverse thrust condition is ended by, for example, receiving an input from the user (e.g., a pilot, a co-pilot, a remote operator, etc.) pushing a button or otherwise ending the reverse thrust condition. In this way, the controller 120 automatically detects the reverse thrust condition has ended or detects the reverse thrust condition has ended manually by the user.

In step 425, the method 400 includes pitching the fan blades 40 to generate a forward thrust upon detecting the reverse thrust condition has ended. For example, the controller 120 controls the one or more fan blade actuation members 44 to pitch the fan blades 40 about the pitch axis P, as shown in FIG. 2. In this way, the fan blades 40 are pitched to change the air flow direction (e.g., as shown by arrow 67) from forward of the turbine engine 10 to aft of the turbine engine 10. In this way, the fan 38 draws in the air such that the air flows through the bypass airflow passage 56 and through the core turbine engine 16 to generate the forward thrust.

In step 430, the method 400 includes translating the transcowl 106 to the fully closed position. For example, the controller 120 controls the one or more transcowl actuation members 110 to translate the transcowl 106 aftward out of the hollow interior portion 108 of the fan cowl 104 and to the fully closed position, as shown in FIG. 2. In this way, the controller 120 controls the one or more transcowl actuation members 110 to extend the one or more rods 112 such that the one or more rods 112 translate (e.g., push) the transcowl 106 aftward and to the fully closed position.

The embodiments of the present disclosure detailed herein allow for translating the transcowl axially forward into the nacelle and reducing the length of the nacelle during a reverse thrust operation such that the air flow is more easily directed into an aft portion of the nacelle to generate the reverse thrust. Thus, the present disclosure allows for efficient use of the variable pitch fan for reverse thrust. The present disclosure also provides for reducing components (e.g., removing the cascade system and the door of current turbine engine reverse thrust systems), thereby, reducing an overall weight of the turbine engine, as compared to turbine engines having reverse thrust systems without the benefit of the present disclosure.

Further aspects of the present disclosure are provided by the subject matter of the following clauses.

A turbine engine comprises a fan including a plurality of fan blades, each fan blade of the plurality of fan blades being rotatable about a pitch axis, a nacelle that circumferentially surrounds the fan, and a thrust reverser system comprising a transcowl that forms a portion of the nacelle, the thrust reverser system translating the transcowl axially forward to an opened position during a reverse thrust condition and pitching the fan blades about the pitch axis to generate a reverse thrust through the turbine engine.

The turbine engine of the preceding clause, the nacelle including a fan cowl, the transcowl being positioned aft of the fan cowl and forming an aft-most portion of the nacelle.

The turbine engine of any preceding clause, the nacelle including a hollow interior portion, the thrust reverser system translating the transcowl axially forward into the hollow interior portion to the opened position.

The turbine engine of any preceding clause, the thrust reverser system including one or more fan blade actuation members, the one or more fan blade actuation members pitching the fan blades about the pitch axis.

The turbine engine of any preceding clause, further comprising a core turbine engine and a gearbox assembly, the fan being coupled to the core turbine engine through the gearbox assembly.

The turbine engine of any preceding clause, the thrust reverser system pitching the fan blades about the pitch axis to generate a forward thrust through the turbine engine upon the reverse thrust condition ending.

The turbine engine of any preceding clause, the thrust reverser system translating the transcowl axially aft to a fully closed position upon the reverse thrust condition ending.

The turbine engine of any preceding clause, the thrust reverser system including one or more transcowl actuation members, the one or more transcowl actuation members translating the transcowl axially forward during the reverse thrust condition.

The turbine engine of any preceding clause, the one or more transcowl actuation members including one or more rods coupled to the transcowl, the one or more rods pulling the transcowl to translate the transcowl axially forward during the reverse thrust condition.

The turbine engine of any preceding clause, further comprising a controller in communication with the one or more transcowl actuation members, the controller controlling the one or more transcowl actuation members to translate the transcowl axially forward during the reverse thrust condition.

The turbine engine of any preceding clause, the nacelle defining a bypass airflow passage.

The turbine engine of any preceding clause, the transcowl forming a portion of the bypass airflow passage.

The turbine engine of any preceding clause, the fan drawing in air from an aftward portion of the bypass airflow passage to generate the reverse thrust.

The turbine engine of any preceding clause, the fan drawing in air from a forward portion of the turbine engine such that the air flows through the bypass airflow passage and the core turbine engine to generate the forward thrust.

The turbine engine of any preceding clause, the controller being a Full Authority Digital Engine Control (FADEC).

The turbine engine of any preceding clause, the fan generating an airflow from forward of the turbine engine to aft of the turbine engine to generate the forward thrust.

The turbine engine of any preceding clause, the fan generating an airflow from aft of the turbine engine to forward of the turbine engine to generate the reverse thrust.

The turbine engine of any preceding clause, the controller receiving one or more signals from at least one of one or more sensors, the turbine engine, or an aircraft, and detecting the reverse thrust condition based on the one or more signals.

The turbine engine of any preceding clause, the controller detecting the reverse thrust condition has ended based on the one or more signals.

The turbine engine of any preceding clause, the one or more signals including at least one of sensor signals, engine condition signals, or aircraft condition signals.

The turbine engine of any preceding clause, detecting the reverse thrust condition including receiving an input from a user.

The turbine engine of any preceding clause, detecting the reverse thrust condition has ended including receiving an input from a user.

The turbine engine of any preceding clause, the one or more rods pushing the transcowl to translate the transcowl axially aftward to the fully closed position.

The turbine engine of any preceding clause, the thrust reverser system translating the transcowl to a partially opened position between the fully closed position and the fully opened position to generate a partial reverse thrust.

A method of operating a turbine engine comprising a fan including a plurality of fan blades, each fan blade of the plurality of fan blades being rotatable about a pitch axis, a nacelle that circumferentially surrounds the fan, and a thrust reverser system including a transcowl, the method comprising detecting, by the thrust reverser system, a reverse thrust condition, translating, by the thrust reverser system, the transcowl axially forward to an opened position upon detecting the reverse thrust condition, and pitching, by the thrust reverser system, the fan blades about the pitch axis to generate a reverse thrust upon detecting the reverse thrust condition.

The method of the preceding clause, the nacelle including a hollow interior portion, and the method comprises translating, by the thrust reverser system, the transcowl axially forward into the hollow interior portion of the nacelle.

The method of any preceding clause, the thrust reverser system including one or more fan blade actuation members, and the method comprises pitching, by the one or more fan blade actuation members, the fan blades about the pitch axis.

The method of any preceding clause, the thrust reverser system including a controller, and the method comprises translating, with the controller, the transcowl axially forward, and pitching, with the controller, the fan blades about the pitch axis.

The method of any preceding clause, translating the transcowl axially forward including translating, by the thrust reverser system, the transcowl from a fully closed position to a fully opened position upon detecting the reverse thrust condition.

The method of any preceding clause, further comprising translating, by the thrust reverser system, the transcowl to a partially opened position between the fully closed position and the fully opened position to generate a partial reverse thrust.

The method of any preceding clause, further comprising detecting, by the thrust reverser system, the reverse thrust condition has ended, and pitching, by the thrust reverser system, the fan blades about the pitch axis to generate a forward thrust through the turbine engine upon detecting the reverse thrust condition has ended.

The method of any preceding clause, further comprising translating, by the thrust reverser system, the transcowl axially aft to a fully closed position upon detecting the reverse thrust condition has ended.

The method of any preceding clause, the thrust reverser system including one or more transcowl actuation members, and the method comprises translating, by the one or more transcowl actuation members, the transcowl axially forward upon detecting the reverse thrust condition.

The method of any preceding clause, the one or more transcowl actuation members including one or more rods coupled to the transcowl, and the method comprises translating, with the one or more rods of the one or more transcowl actuation members, the transcowl axially forward.

The method of any preceding clause, the nacelle including a fan cowl, the transcowl being positioned aft of the fan cowl and forming an aft-most portion of the nacelle.

The method of any preceding clause, the nacelle defining a bypass airflow passage.

The method of any preceding clause, the transcowl forming a portion of the bypass airflow passage.

The method of any preceding clause, further comprising drawing in air with the fan from an aftward portion of the bypass airflow passage to generate the reverse thrust.

The method of any preceding clause, further comprising drawing in air with the fan from a forward portion of the turbine engine such that the air flows through the bypass airflow passage and the core turbine engine to generate the forward thrust.

The method of any preceding clause, the controller being a Full Authority Digital Engine Control (FADEC).

The method of any preceding clause, further comprising generating an airflow with the fan from forward of the turbine engine to aft of the turbine engine to generate the forward thrust.

The method of any preceding clause, further comprising generating an airflow with the fan from aft of the turbine engine to forward of the turbine engine to generate the reverse thrust.

The method of any preceding clause, further comprising receiving, by the controller, one or more signals from at least one of one or more sensors, the turbine engine, or an aircraft, and detecting, by the controller, the reverse thrust condition based on the one or more signals.

The method of any preceding clause, further comprising detecting, by the controller, the reverse thrust condition has ended based on the one or more signals.

The method of any preceding clause, the one or more signals including at least one of sensor signals, engine condition signals, or aircraft condition signals.

The method of any preceding clause, detecting the reverse thrust condition including receiving an input from a user.

The method of any preceding clause, detecting the reverse thrust condition has ended including receiving an input from a user.

The method of any preceding clause, further comprising pushing, with the one or more rods, the transcowl to translate the transcowl axially aftward to the fully closed position.

The method of any preceding clause, further comprising translating, by the thrust reverser system, the transcowl to a partially opened position between the fully closed position and the fully opened position to generate a partial reverse thrust.

Although the foregoing description is directed to the preferred embodiments of the present disclosure, other variations and modifications will be apparent to those skilled in the art and may be made without departing from the spirit or the scope of the disclosure. Moreover, features described in connection with one embodiment of the present disclosure may be used in conjunction with other embodiments, even if not explicitly stated above.

## Claims

1. A turbine engine (10) comprising:
a fan (38) including a plurality of fan blades (40), each fan blade (40) of the plurality of fan blades (40) being rotatable about a pitch axis;
a nacelle (50) that circumferentially surrounds the fan (38); and
a thrust reverser system (100) comprising a transcowl (106) that forms a portion of the nacelle (50), the thrust reverser system (100) translating the transcowl (106) axially forward to an opened position during a reverse thrust condition and pitching the fan blades (40) about the pitch axis to generate a reverse thrust through the turbine engine (10).

2. The turbine engine (10) of claim 1, wherein the nacelle (50) includes a fan cowl (104), the transcowl (106) being positioned aft of the fan cowl (104) and forming an aft-most portion of the nacelle (50).

3. The turbine engine (10) of any preceding claim, wherein the nacelle (50) includes a hollow interior portion (108), the thrust reverser system (100) translating the transcowl (106) axially forward into the hollow interior portion (108) to the opened position.

4. The turbine engine (10) of any preceding claim, wherein the thrust reverser system (100) includes one or more fan blade actuation members (44), the one or more fan blade actuation members (44) pitching the fan blades (40) about the pitch axis.

5. The turbine engine (10) of any preceding claim, further comprising a core turbine engine (16) and a gearbox assembly (46), the fan (38) being coupled to the core turbine engine (16) through the gearbox assembly (46).

6. The turbine engine (10) of any preceding claim, wherein the thrust reverser system (100) pitches the fan blades (40) about the pitch axis to generate a forward thrust through the turbine engine (10) upon the reverse thrust condition ending.

7. The turbine engine (10) of claim 6, wherein the thrust reverser system (100) translates the transcowl (106) axially aft to a fully closed position upon the reverse thrust condition ending.

8. The turbine engine (10) of any preceding claim, wherein the thrust reverser system (100) includes one or more transcowl actuation members (110), the one or more transcowl actuation members (110) translating the transcowl (106) axially forward during the reverse thrust condition.

9. The turbine engine (10) of claim 8, wherein the one or more transcowl actuation members (110) includes one or more rods (112) coupled to the transcowl (106), the one or more rods (112) pulling the transcowl (106) to translate the transcowl (106) axially forward during the reverse thrust condition.

10. The turbine engine (10) of claim 8 or 9, further comprising a controller (120) in communication with the one or more transcowl actuation members (110), the controller (120) controlling the one or more transcowl actuation members (110) to translate the transcowl (106) axially forward during the reverse thrust condition.

11. A method of operating a turbine engine (10) comprising a fan (38) including a plurality of fan blades (40), each fan blade (40) of the plurality of fan blades (40) being rotatable about a pitch axis, a nacelle (50) that circumferentially surrounds the fan (38), and a thrust reverser system (100) including a transcowl (106), the method comprising:
detecting, by the thrust reverser system (100), a reverse thrust condition;
translating, by the thrust reverser system (100), the transcowl (106) axially forward to an opened position upon detecting the reverse thrust condition; and
pitching, by the thrust reverser system (100), the fan blades (40) about the pitch axis to generate a reverse thrust upon detecting the reverse thrust condition.

12. The method of claim 11, wherein the nacelle (50) includes a hollow interior portion (108), and the method comprises translating, by the thrust reverser system (100), the transcowl (106) axially forward into the hollow interior portion (108) of the nacelle (50).

13. The method of claim 11 or 12, wherein the thrust reverser system (100) includes one or more fan blade actuation members (44), and the method comprises pitching, by the one or more fan blade actuation members (44), the fan blades (40) about the pitch axis.

14. The method of any of claims 11 to 13, wherein the thrust reverser system (100) includes a controller (120), and the method comprises translating, with the controller (120), the transcowl (106) axially forward, and pitching, with the controller (120), the fan blades (40) about the pitch axis.

15. The method of any of claims 11 to 14, wherein translating the transcowl (106) axially forward includes translating, by the thrust reverser system (100), the transcowl (106) from a fully closed position to a fully opened position upon detecting the reverse thrust condition.
